Europäisches Patentamt

European Patent Office

Office européen des brevets

(19)

(11) Publication number: **0 147 955**
**B1**

(12)     EUROPEAN PATENT SPECIFICATION

(45) Date of publication of patent specification: **21.09.88**

(21) Application number: **84308324.7**

(22) Date of filing: **30.11.84**

(51) Int. Cl.⁴: **G 01 H 3/12,** G 01 S 7/52,
G 01 S 15/02 // A61B8/00

(54) Ultrasonic non-linear parameter measuring system.

(30) Priority: **02.12.83 JP 227949/83**
**30.05.84 JP 109831/84**

(43) Date of publication of application:
**10.07.85 Bulletin 85/28**

(45) Publication of the grant of the patent:
**21.09.88 Bulletin 88/38**

(84) Designated Contracting States:
**DE FR GB NL SE**

(56) References cited:
**PROCEEDINGS 1st INTERNATIONAL
SYMPOSIUM ON MEDICAL IMAGING AND
IMAGE INTERPRETATION ISMIII '82, vol. 375,
IEEE Computer Society, SPIE-The International
Society for Optical Engineering, 26th-28th
October 1982, pages 454-459, Berlin, DE;
T.SATO et al.: "Nonlinear parameter
tomography, active incoherent imaging and
adaptive imaging for ultrasonic tissue
characterization"**

(73) Proprietor: **FUJITSU LIMITED**
**1015, Kamikodanaka Nakahara-ku
Kawasaki-shi Kanagawa 211 (JP)**

(72) Inventor: **Shimura, Takaki c/o FUJITSU LIMITED
Patent Department 1015 Kamikodanaka
Nakahara-ku Kawasaki-shi Kanagawa 211 (JP)**
Inventor: **Murakami, Keiichi c/o FUJITSU
LIMITED
Patent Department 1015 Kamikodanaka
Nakahara-ku Kawasaki-shi Kanagawa 211 (JP)**
Inventor: **Miwa, Hirohide c/o FUJITSU LIMITED
Patent Department 1015 Kamikodanaka
Nakahara-ku Kawasaki-shi Kanagawa 211 (JP)**
Inventor: **Sato, Takuso c/o FUJITSU LIMITED
Patent Department 1015 Kamikodanaka
Nakahara-ku Kawasaki-shi Kanagawa 211 (JP)**
Inventor: **Ichida, Nobuyuki c/o FUJITSU
LIMITED
Patent Department 1015 Kamikodanaka
Nakahara-ku Kawasaki-shi Kanagawa 211 (JP)**

(74) Representative: **Sunderland, James Harry et al
HASELTINE LAKE & CO. Hazlitt House
28 Southampton Buildings Chancery Lane
London WC2A 1AT (GB)**

Courier Press, Leamington Spa, England.

**0 147 955**

(58) References cited:

THE JOURNAL OF THE ACOUSTICAL SOCIETY
OF JAPAN, vol. 39, no. 8, August 1983, pages
521-530, Acoustical Society of Japan, Tokyo,
JP; N.ICHIDA et al.: "Nonlinear parameter
tomography"

1972 ULTRASONICS SYMPOSIUM
PROCEEDINGS, IEEE Group on Sonics and
Ultrasonics, 4th-7th October 1972, Boston,
Massachusetts, pages 54-58, New York, US;
T.D.SACHS et al.: "Thermo-acoustic sensing
technique - tast"

ABSTRACT OF NEW TECHNOLOGY - FROM
THE AIR FORCE SYSTEMS COMMAND, 10th
November 1981, Project No. F49620-79-C-0217,
Washington D.C., (US); G.S.KINO et al.:
"Remote three-dimensional temperature
probing"

JOURNAL OF THE ACOUSTICAL SOCIETY OF
AMERICA, vol. 45, no. 5, May 1969, pages
1251-1257, New York, US; R.C.WILLIAMSON:
"Echo phase-comparison technique and
measurement of sound velocity in water"

THE JOURNAL OF THE ACOUSTICAL SOCIETY
OG AMERICA, vol. 74, no. 5, November 1983,
Acoustical Society of America, pages 1518-
1522, New York, US; ZHEMING ZHU et al.:
"Determination of the acoustic nonlinearity
parameter B/A from phase measurements"

## Description

This invention relates to an ultrasonic non-linear parameter measuring system.

The principle of non-linear (parameter) visualisation is described in Japanese Patent application No. 58-39907 (corresponding to U.S. Patent 4,566,460, filed March 8, 1984 and published January 1, 1986 and to European Patent Application No. 84301591.8, publication No. 0128635) and Japanese Patent Application No. 58-119100. In the former case, non-linear parameter B/A is obtained at a high speed in respect of a measuring ultrasonic beam scanning line by causing a comparatively low frequency flat pumping pulse to cross orthogonally a comparatively high frequency continuous ultrasonic beam for measurement and by phase-demodulating a measuring wave phase-modulated by the pumping pulse. In the latter case, almost the same type of pumping pulse is received at almost all parts of a measuring beam and the need for a mechanically large structure can be eliminated by applying the pumping pulse in such a way that it is concentric with the measuring beam and opposite to the measuring beam in its direction of travel.

However, in both cases a transmission method is employed wherein a signal is generated from a transducer for sending a measuring ultrasonic wave and thereafter it is received by a transducer for receiving a measuring signal after passing through (being transmitted in one direction through) the medium to be measured. Attempts to obtain tomographic images in actual clinical applications have suffered serious operational problems in that the transmission method can be applied only in circumstances in which an area of the measuring medium to be observed can be set between the sending and receiving transducers (this is possible only with the breast), or the area of the measuring medium to be observed must be scanned with the transducers for measurement by surrounding such area by a water pillow.

Moreover, ultrasonic wave reflections arise from bones and cavities and thereby observation by the transmission method can be made difficult.

According to the present invention there is provided an ultrasonic non-linear parameter measuring system, comprising:

transducer means operable to transmit an ultrasonic pulse, as a measurement pulse, into a medium in respect of which measurement is to be effected, and operable to receive ultrasonic waves reflected from the medium,

transducer means operable to transmit an ultrasonic pulse, of comparatively low frequency and high sound pressure in relation to the measurement pulse, as a pumping pulse, into the medium, from substantially or approximately the same location as that from which the measurement pulse is transmitted, and in substantially or approximately the same direction as that in which the measurement pulse is transmitted,

transducer drive timing means operable to cause transmission of the measurement pulse at a timing such that it is superposed on a predetermined phase of the pumping pulse,

phase detection means operable to effect phase detection in relation to received reflected ultrasonic waves, and

means operable to effect differentiation with respect to time of a signal based on the results of such phase detection, thereby to obtain values representing spatial distribution of the non-linear parameter along the line of transmission of the pulses.

An embodiment of the present invention provides an apparatus for measuring distribution of a non-linear parameter of an ultrasonic wave medium, and particularly an apparatus for measuring the space distribution of a physical characteristic of an ultrasonic wave medium such as living tissue, etc., wherein the space distribution of values of a non-linear parameter is measured to characterise the medium and moreover such space distribution is visualized easily and at a high speed, by making use of a non-linear characteristic related to the fact that sound velocity is constant with respect to sound pressure as a first approximation but is proportional to sound pressure as a second approximation. Moreover, an embodiment of this invention provides an apparatus wherein a non-linear parameter can be measured by a reflection method rather than a so-called transmission method.

An embodiment of this invention can enable a distribution of a non-linear parameter to be obtained by a reflection method.

An embodiment of this invention can enable a non-linear parameter to be obtained by a reflection method with a high accuracy.

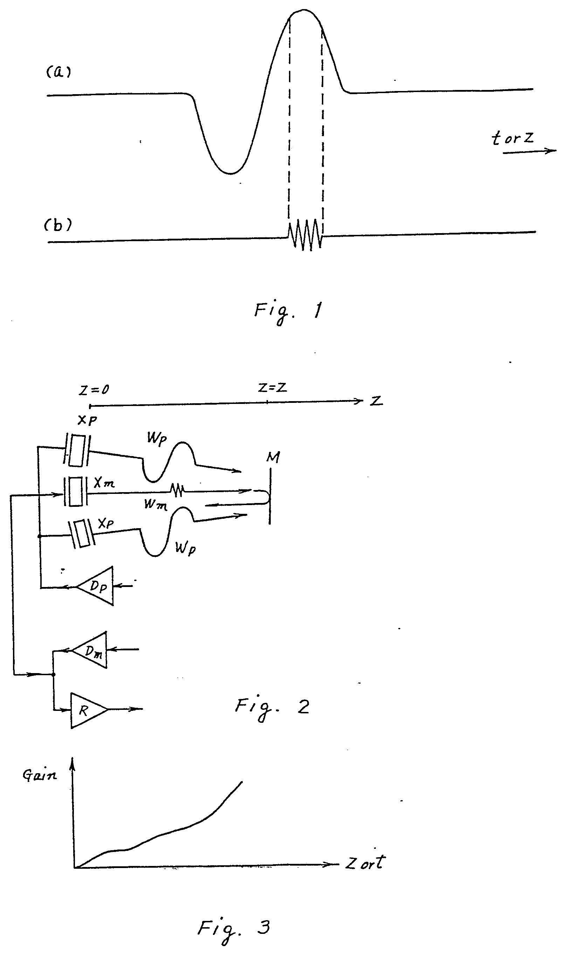

In operation of an embodiment of this invention an ultrasonic burst pulse wave is transmitted into a measuring medium to be observed as a measuring wave for the purpose of ultrasonic wave measurement, instead of using a continuous wave as the measuring wave, and an ultrasonic wave pulse of comparatively low frequency in relation to the measurement pulse for pumping is transmitted into the medium to be observed from substantially or approximately the same place as the measuring burst pulse wave is transmitted and in the same direction as the measuring burst pulse wave. Drive timing is adjusted so that a measuring burst pulse wave (b) is superposed on a high sound pressure part (or low pressure part) of a pumping pulse wave (a) as illustrated in Fig. 1. Phase difference is obtained between a receiving signal turned by reflection of a measuring wave when the measuring burst pulse wave is transmitted so as to be superposed on a particular phase location of a pumping pulse wave and a receiving signal returned by reflection of a measuring wave when only the measuring burst pulse wave is transmitted into the medium, or when the measuring wave is transmitted so as to be superposed on another phase location of a pumping pulse wave. Thereby phase modulation of a measuring burst pulse wave arising only due to the effect of a pumping pulse wave is detected by a reflection method, and the ultrasonic wave non-linear parameter B/A of the medium to be observed is obtained.

An embodiment of the present invention provides that there can be obtained the distribution of non-linear parameter B/A by differentiating a phase signal obtained through discrimination of a receiving signal by utilising the fact that a point focussed on the travelling measuring wave suffers phase modulation, as such point travels to a reflecting body in the medium to be observed, determined by an integral value of the product of the non-linear parameter B/A (function of location in the medium) applicable to the region through which the measuring wave has passed and sound pressure P (function of location depending on the effects of attenuation) of the pumping wave.

Reference is made, by way of example, to the accompanying drawings, in which:—

Fig. 1 is a waveform diagram for assistance in explanation of an embodiment of the present invention,

Fig. 2 is a schematic diagram for assistance in explanation of basic operations of an embodiment of the present invention,

Fig. 3 is a graph illustrating TGC (Time Gate Control),

Figs. 4 and 5 are waveform diagrams illustrating phase relationships relating to the reflection of an ultrasonic wave in a medium,

Fig. 6A is a schematic block diagram showing apparatus in accordance with an embodiment of the present invention,

Fig. 6B and Fig. 6C are, respectively, a perspective view and a cross-sectional view of a transducer structure which can be employed in an embodiment of the present invention,

Fig. 7 is a waveform diagram illustrating signal waveforms arising in operation of the apparatus of Fig. 6A,

Fig. 8 is a schematic block diagram of apparatus in accordance with another embodiment of the present invention,

Fig. 9 is a waveform diagram for assistance in explanation of operation in accordance with a further embodiment of the present invention,

Fig. 10 is a schematic block diagram of apparatus in accordance with the further embodiment of the present invention,

Figs. 11, 12 and 13 are perspective views of respective transducer structures which can be employed in embodiments of the present invention, and

Fig. 14 is a waveform diagram for assistance in explanation of yet another embodiment of the present invention.

If sound velocity when sound pressure within an ultrasonic wave medium is (approaches) zero is $C_o$, and if the density of the medium is $\rho_o$, sound velocity C when a sound pressure P is effective can be expressed as follows.

$$C=C_o+1/(2\rho_oC_o)\times(B/A)\times P \qquad (1)$$

where, $B/A=2\rho_oC_o(\partial C/\partial P)_s$, and subscript s indicates that the partial derivative is obtained for equal (constant) entropy.

Thus, sound velocity C changes as indicated below as a result of the application of a pumping pulse of a sound pressure P

$$\Delta C=1/(2\rho_oC_o)\times(B/A)\times P \qquad (2)$$

An embodiment of the present invention is operable so that, as shown in Fig. 2, an ultrasonic burst pulse $W_m$ is transmitted into a measuring medium in a Z-axis direction, as seen in the Figure, from a transducer $X_m$ for measurement placed at the position corresponding to Z=0 and a reflected wave is received at the measurement transducer, the reflected wave arising as a result of reflection of the burst pulse $W_m$ at a reflecting body M in the measuring medium. It is also operable so that, at this time (in respect of the pulse $W_m$ as it travels to the reflecting body), a transducer $X_p$ for transmitting a pumping pulse, positioned in almost the same location as the transducer $X_m$ for measuring pulse $W_m$, transmits a pumping pulse $W_-$ in the Z-axis direction as shown in the Figure.

For convenience of explanation, the pulses $W_p$ and $W_m$ will be taken as being superposed upon each other (and see also Fig. 1 and Fig. 2). Sound pressure of $W_m$ is taken as being sufficiently low, as compared with the sound pressure of $W_p$, that it is sufficient to consider only the sound pressure P of $W_p$ as providing the pressure P effective in equations (1) and (2). While the measuring pulse $W_m$ reaches (as the measuring pulse $W_m$ travels to) a reflecting body M where Z=Z, it suffers changes of sound velocity as indicated below, which changes differ for different locations (values of Z) in the medium. The change of sound velocity suffered at each location (each value of Z) in the medium, is:—

$$\Delta C(Z)=1/(2\rho_oC_o)\times(B/A) \, (Z)\times P(Z) \qquad (3)$$

4

# 0 147 955

Accordingly, the measuring pulse suffers changes of phase which change in accordance with location (Z) and which are proportional to $\Delta C(Z)$. Namely, a phase lead arises in respect of a place where sound velocity is high but a phase delay arises in respect of a place where sound velocity is low. Therefore, when the measuring pulse $W_m$ reaches the reflecting body M, it has suffered an overall change of phase $\varphi(Z)$ which is proportion to an integral value of the change of sound velocity as indicated by the equation (3) (as compared with a case in which the measuring pulse does not suffer changes of sound velocity or changes due to B/A):—

$$\varphi(Z)=K\int_{o}^{z}\Delta C(Z)\ dz$$

$$=K\int_{o}^{z}(1/2\rho_o C_o)\times(B/A)(Z)\times P(Z)\ dz \qquad (4)$$

where K is a proportionality constant.

The embodiment of the present invention is also operable so that after reflection of the measuring pulse by reflecting body M, i.e. as the reflection of the measuring pulse travels back to the measuring transducer $X_m$, no pumping pulse is applied to be effective for changing the sound velocity (phase) of the reflected measuring pulse (more precisely, a reflected wave arising from reflection of the pumping pulse will return together with the reflected wave arising from the measuring pulse but since the reflectivity of a medium is generally smaller at lower frequencies (and the frequency of the pumping pulse is less than that of the measuring pulse), sound pressure of the reflected wave arising from the pumping pulse is sufficiently low as compared with that of the transmitted pumping pulse wave as to have substantially no effect upon the reflected wave arising from the measuring pulse). Therefore $\varphi(Z)$ indicated by the equation (4) can be obtained by phase demodulation of a receiving signal of the reflected measuring pulse as received back at the transducer $X_m$.

Equation (5) as indicated below can be obtained by differentiating $\varphi(Z)$ with respect to Z.

$$d\varphi(Z)/dz=K(1/2\rho_o C_o)\times(B/A)(Z)\times P(Z) \qquad (5)$$

The left side of equation (5) is a value obtained by actual measurement, whilst K, $\rho_o$, $C_o$ on the right side of equation (5) are constants. Accordingly, (B/A) (Z) can be obtained if a value of P(Z) is known.

As an example of ultrasonic wave frequencies which can be employed, a frequency of about 500 kHz, which does not show too large a degree of attenuation within living tissue, may be used for the pumping pulse $W_p$, whilst a frequency of about 5 MHz, which is higher by one digit (one order of magnitude) than that of the pumping pulse may be used for the measuring pulse $W_m$. It is known that an ultrasonic wave is generally attenuated by about 1 dB/MHz/cm within living tissue and in the case of a pumping wave $W_p$ of frequency 500 kHz, the pumping wave is attenuated by about 0.5 dB/cm. Accordingly, P(Z) can be derived (estimated) using equation (6) indicated below to provide P(Z) in equation (5).

$$P(Z)=P(O)\times10^{-(0.5Z/20)} \qquad (6)$$

where the units of Z are centimetres.

In this case, from equation (5),

$$B/A\cdot(Z)=(d\varphi(Z)/dZ)\times(2\rho_o C_o/K)\times(1/P(o))\times10^{(0.5Z/20)}$$
$$=K'_e{}^{+\alpha z}(d\varphi(Z)/dZ) \qquad (7)$$

Where,

$$K'=2\rho_o C_o/KP(0),\ \alpha=(0.5Z/20)\ \log_e 10$$

Namely, an embodiment of the present invention provides that a value of B/A (Z) can be obtained by multiplying a coefficient $K'e^{+\alpha z}$ which may increase with a distance Z, by a value obtained by differentiating a phase demodulation output $\varphi(Z)$.

If an assumption that attenuation in living tissue is fixed to 1 dB/MHz/cm in any place in the tissue is not tenable in any practical case, it goes without saying that TGC (Time Gain Control), which is capable of freely setting the gain of a receiving signal as shown in Fig. 3 for each distance (depth) Z into the medium can be used in an embodiment of the invention, as it is used in ordinary B mode tomographic image apparatus. The gain curve to be provided by TGC in any particular practical case is obtained on the basis of trial and error whilst monitoring the results of measurement.

When average sound velocity in a medium is $C_o$, Z becomes approximately equal to $C_o t$ (t: time after the ultrasonic wave is transmitted) and $dZ=C_o dt$.

$$d\varphi(Z)/dZ=(1/C_o)\times(d\varphi(Z)/dt) \qquad (8)$$

5

Naturally, the differentiation with respect to Z involved in equation (5) can be replaced by differentiation with respect to time in an embodiment of the present invention.

As described above, a phase $\varphi(Z)$ of a wave reflected from a reflecting body M at a distance (depth) Z in a measuring medium can in principle be obtained as indicated above, but this is not easily in reality, for the following reasons.

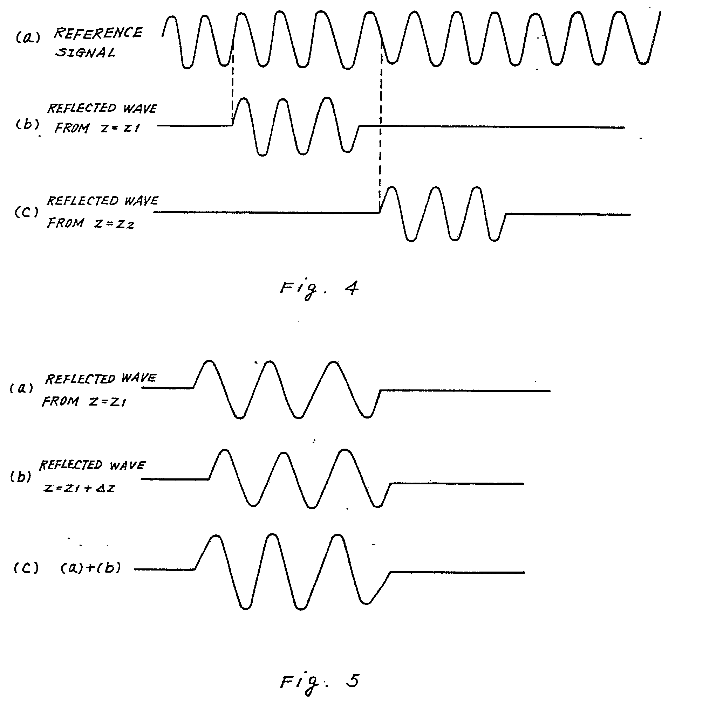

First, when phase comparison between a reference signal as shown in Fig. 4(a) and a receiving signal (corresponding to a reflected wave) is carried out for detecting the phase of the reflected wave, in the case of a reflection method, as illustrated in Fig. 4(b) and (c), the phase of the receiving signal with respect to the reference signal is different for different distances (e.g. $Z_1$ and $Z_2$) between the transducer and a reflecting body, and thus phase shift due to the effect of B/A(Z) P(Z) is hidden.

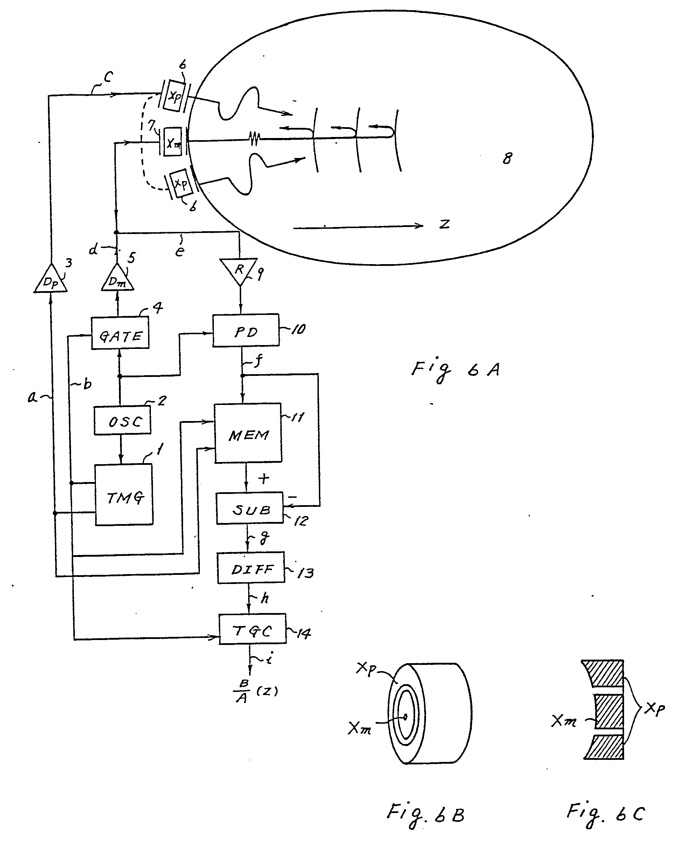

Second, as shown in Fig. 5, a reflected wave received from living tissue often contains the superimposition of a variety of reflections (arising from a variety of reflecting bodies, which may be disposed at different depths (e.g. $Z_1$ and $Z_1+\Delta Z$) in the measuring medium—see Figs. 5(a) and (b)) and the resultant combined receiving signal has a phase which is largely different from any original reflection signal (a) or (b) and phase shift due to the effects of (B/A) (Z) $\cdot$ P(Z) is also hidden.

Thus, in an embodiment of this invention, employing a reflection method, for practical measurement the embodiment is operable to obtain a difference between the phase change suffered by a receiving signal, as estimated on the basis of repeated transmission of measuring pulses in correspondence to a particular phase location of repeated pumping pulses, and the phase change suffered by a receiving signal when only the measuring pulse is transmitted without sending the pumping pulse, or the phase change suffered by a receiving signal as estimated on the basis of repeated transmissions of measuring pulses in correspondence to another particular phase location of repeated pumping pulses.

As shown in Fig. 4 or Fig. 5, since changes of phase due to transmission (Fig. 4) or pulse superposition (Fig. 5) appear whether or not a pumping pulse is transmitted (and independent of the phase relationship between measuring pulses and pumping pulses) (the transmitting period of pumping pulse is about 200 $\mu$sec and therefore it is possible to think that any change does not occur during such a short period), a phase difference $\varphi(Z)$ based only upon the effect of B/A(Z) P(Z) can be extracted (without any effect of transmission or pulse superposition being manifest in the phase difference) for example after storing phase demodulation outputs of the respective cases.

Apparatus according to an embodiment of the present invention will now be explained with reference to Figs. 6A, 6B and 6C.

In Fig. 6A, 1 is a timing control part operable to generate timings for the sending of pumping pulses. 2 is a continuous wave oscillator used in the provision of measuring burst pulses. 3 is a driver for providing pumping pulses. 4 is a gate circuit operable to extract from an output of the oscillator 2 so that a measuring burst pulse is superposed on a particular phase of a pumping pulse (so that a measuring burst pulse is transmitted at a timing corresponding to transmission of a particular phase part of a pumping pulse) (usually this phase is a phase at which sound pressure of the pumping pulse is at a maximum or a minimum). 5 is a driver for providing measuring burst pulses. 6 is a transducer for generating pumping pulses, driven by the driver 3. 7 is a transducer for generating measuring burst pulses, driven by the driver 5. 8 is an ultrasonic medium to be measured. 9 is a receiving amplifier. 10 is a phase detector. 11 is a memory for temporarily storing an output of phase detector 10. 12 is a subtraction circuit for subtracting an output of phase detector 10 from an output of memory 11. 13 is a differential circuit. 14 is a so-called TGC circuit. The TGC circuit need not be disposed as shown: it can be disposed in any desired stage after the receiving amplifier 9.

Figs. 6B and 6C are respectively a perspective view and a cross-sectional view of an example of a transducer structure which provides the transducers 6 and 7.

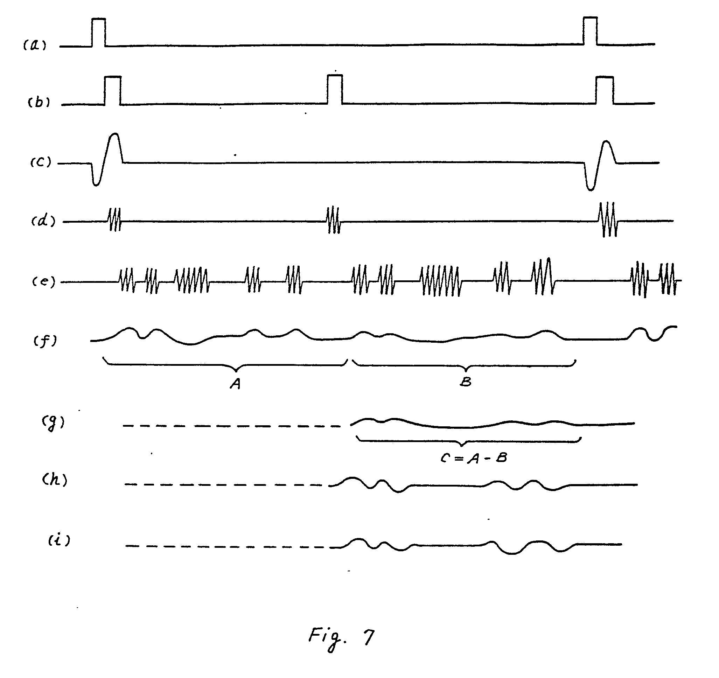

Fig. 7 shows signal time waveforms (a) to (i) arising at correspondingly labelled positions in the apparatus of Fig. 6A.

When a pulse as seen in waveform (a) of Fig. 7 is applied to the driver 3 for providing a pumping pulse, a signal waveform as seen at (c) in Fig. 7 is applied to the transducer 6 for generating a pumping pulse. Meanwhile, an output of the continuous wave oscillator 2 is extracted only in respect of a timing (see waveform (b) of Fig. 7) at which a measuring pulse is to be sent, for example in respect of a timing corresponding to a high sound pressure part of a pumping pulse, by means of the gate circuit 4, and a drive signal is then applied to the transducer 7 via the driver 5. As a result, in this case a pumping pulse and a measuring pulse travel in the medium 8 to be measured maintaining the prescribed timing relationship, which is for example as shown in Fig. 1.

It will be seen from Fig. 7, waveforms (a), (c) and (d), that a pumping pulse and a measuring pulse are transmitted together (with the prescribed timing relationship as mentioned above) but that also, at another timing (determined by the gate timing signal shown in waveform (b)) a measuring pulse is transmitted without an accompanying pumping pulse.

Reflected ultrasonic waves from the medium to be measured are received by the transducer 7 and amplified by the receiving amplifier 9 to provide a signal as shown at waveform (e) of Fig. 7 which is finally applied to one input of the phase detection circuit 10. An output of the continuous wave oscillator 2 is applied to another input of the phase detection circuit as a reference signal and the phase difference of these two inputs is output from the phase detection circuit 10 and is sent to the memory circuit 11. This

# 0 147 955

output is as shown at waveform (f) of Fig. 7.

In waveform (f), section A corresponds to the detected phase difference arising when a pumping pulse and a measuring pulse are transmitted together, whilst section B corresponds to the detected phase difference when only a measuring pulse is transmitted.

As trigger signals for memory storage a pumping wave drive timing signal as seen in waveform (a) and a gate timing signal as seen in waveform (b) of Fig. 7 are applied to the memory circuit 11. Thus signals (output from phase detection circuit 10) corresponding to a period (corresponding to section A in waveform (f) in Fig. 7) of one scanning line from the gate signal timing just after a pumping wave drive timing are stored in memory 11. This memory content is extracted by a next gate timing pulse and is sent to the subtraction circuit 12. The subtraction circuit 12 subtracts an output of the phase detection circuit 10 corresponding to section B in waveform (f) from the output (corresponding section A of waveform (f)) of the memory circuit 11, thereby a difference between outputs of the phase detection circuit when a pumping wave is applied and when it is not applied is obtained as shown in waveform (g) of Fig. 7. This difference is then sent to the TGC circuit through a differential circuit.

A gate timing signal as shown in waveform (b) of Fig. 7 is applied as a trigger signal to the TGC circuit 14 and an output (waveform (h) of Fig. 7) of the differential circuit 13 of Fig. 6A is amplified, for example, in such a manner that the amplification gain changes with time as shown in Fig. 3, in synchronisation with transmission of a measuring pulse (see waveform (i). Thereby, a final output B/A(Z) is obtained.

The memory circuit 11 may be an analog memory using a delay line such as a BBD (Bucket Brigade Device) or CCD (Changed Coupled Device), etc. or a digital memory combining an A/D converter and a memory or shift register or a random access memory.

As described above, according to an embodiment of this invention, space distribution of non-linear parameter B/A(Z) of an ultrasonic medium is obtained by a reflection method rather than a transmission method. Accordingly, a mechanical structure such as a water tank, which is required for the transmission method, is no longer necessary, and the measuring medium can be observed from various angles and operationability can be drastically improved.

In the above described embodiment of the present invention (Fig. 6A and 7) phase difference between the cases in which a pumping pulse is applied with the measuring pulse and in which the pumping pulse is not applied is obtained by subtraction between results of phase detection. However, in the following embodiment of the present invention a phase difference between cases in which the pumping wave is so applied and is not applied is obtained by direct comparison of phases between a receiving (RF) signal obtained when the pumping wave is applied and a receiving (RF) signal obtained when the pumping wave is not applied.

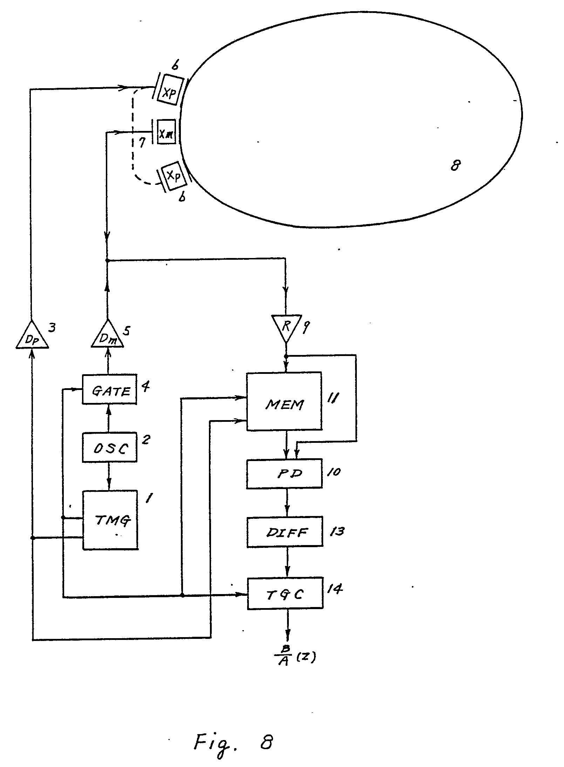

Apparatus in accordance with this embodiment of the present invention is shown in Fig. 8.

In Fig. 8, the component elements similar to component elements of Fig. 6A are given the same reference signs and explanation thereof will be omitted.

The difference between the apparatuses of Figs. 6A and 8 is that the sequence of phase detection circuit 10 and memory circuit 11 is inverted and the subtraction circuit 12 is eliminated.

In the apparatus of Fig. 8, the memory circuit 11 is required to be a high speed analog (such as a CCD) or digital (combining an AD converter and memory or shift register) memory sufficient for directly storing the (RF) receiving signal. Operation of the apparatus of Fig. 8 will be readily understood without detailed explanation, for example by referring also to Fig. 7.

In a further embodiment of the present invention means for improving the S/N ratio of the measured B/A(Z) distribution can be provided. Explanation will now be given in relation to such means.

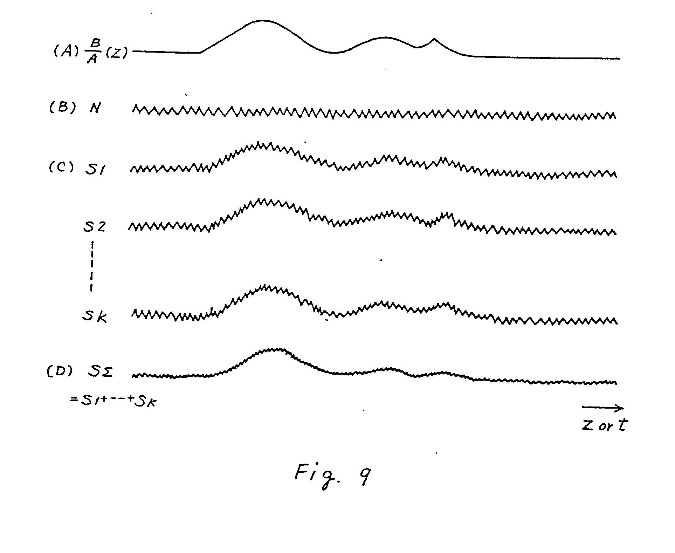

When the change of phase of a measuring pulse due to a factor the product of a non-linear parameter and a sound pressure (see equation 3 or 4 for example) is small, noise generated in circuitry elements or from other causes cannot be neglected as regards the intrinsic change of phase $\varphi(Z)$ (Equation 4). Moreover, when $\varphi(Z)$ is differentiated for obtaining B/A(Z) the differential operation can introduce a large noise level. Accordingly, the obtained B/A(Z) may contain a significant noise factor. This is illustrated in Fig. 9. When noise N as seen in waveform (B) in Fig. 9 is added to a noise-free B/A(Z) output as shown in waveform (A) of Fig. 9, a signal as shown in waveform (C) in Fig. 9 is actually output.

When measurements in respect of the same region are effected K times, signals including noise such as $S_1$ $S_2$ as shown in waveforms (C) of Fig. 9 are obtained and when these signals are added (so that parts of the signals corresponding the same point (same Z coordinate) in the medium are added), the amplitude of each signal is multiplied by K in respect of each point. However the noise factor is multiplied by K only in terms of a power. If the noise is irregular (random) noise, the amplitude of the noise at each point is multiplied only by $\sqrt{K}$. Accordingly, the S/N ratio is improved by $\sqrt{K}$ times and an output as shown in waveform (D) in Fig. 9 can be obtained.

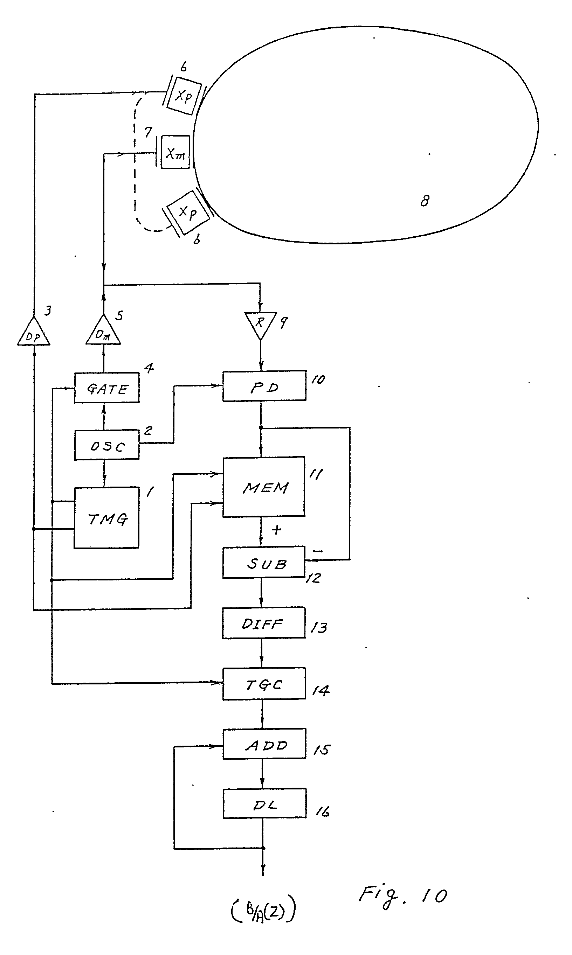

An example of apparatus in accordance with this further embodiment of the invention is shown in Fig. 10.

In Fig. 10, component elements similar to those of Fig. 6A are given the same reference signs.

In the apparatus of Fig. 10, 16 is a delay circuit which delays a signal received thereby by a time equal to the repetition period T of transmission of pumping pulse waves. For example, the delay circuit can be realized by analog means such as a BBD or a CCD, etc. or by digital means combining an A/D converter and a shift register or random access memory. 15 is an adder which may be constituted by analog or digital

7

means in accordance with the kind of delay circuit used.

With the apparatus shown in Fig. 10, it is apparent that an output of TGC circuit 14 is added for each point of the same Z-axis coordinate and that the S/N ratio can be improved by so-called synchronous addition.

Embodiments of this invention can allow a two- or three-dimensional distribution of B/A(Z) to be obtained. As will be clear from the above description, distribution of B/A(Z) on a particular scanning line can be obtained. A two- or three-dimensional distribution of B/A(Z) can be obtained for example by moving the transducer 6 for the pumping pulses and the transducer 7 for the measuring pulses in direction(s) x or/and y and storing values of memory address B/A(Z) corresponding to the x or/and y coordinate(s), while the relative positioning of said transducers is kept constant.

A two-dimensional distribution of B/A(Z) can be obtained in accordance with an embodiment of this invention by utilizing a transducer structure wherein transducers $x_p$ for pumping pulses and transducers $x_m$ for measuring pulses are respectively arrayed as shown in Fig. 11 and by executing electronic scanning in the direction x indicated in Fig. 11.

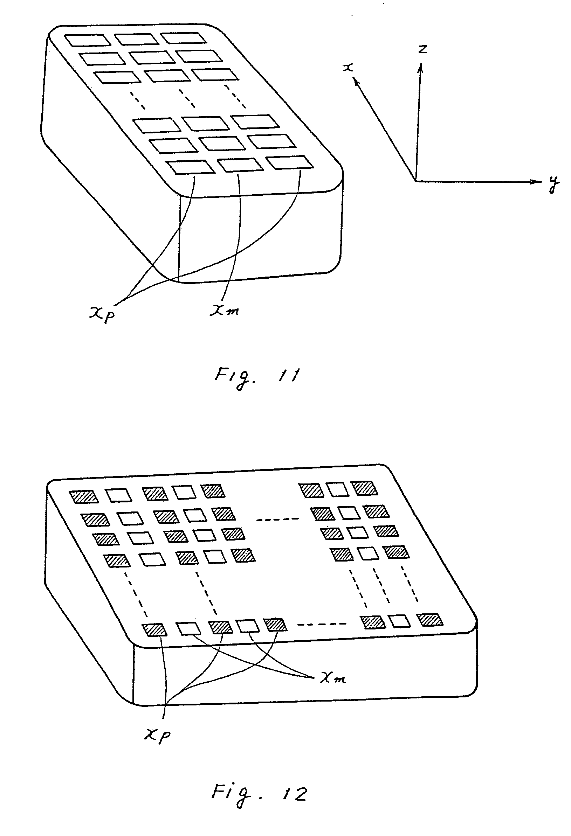

A three-dimensional distribution of B/A(Z) can also be obtained in accordance with an embodiment of this invention by utilizing, for example, the transducer array structure shown in Fig. 12, which represents an expansion of transducer array of Fig. 11 in the y-axis direction of Fig. 11.

As indicated above, transducer array structures as shown in Fig. 11 or Fig. 12 may be used for obtaining two-dimensional or three-dimensional distributions of B/A(Z), but it is alternatively possible to obtain two- or three-dimensional distributions of B/A(Z) through mechanical single or two-dimensional scanning of the transducer as shown in Fig. 6(B).

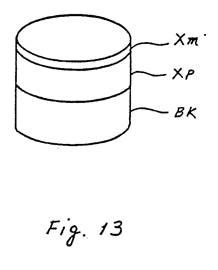

In connection with the above-described embodiments of the invention, the transducer for pumping pulses and the transducer for measuring pulses are indicated to be provided adjacently in a lateral direction. However, embodiments of the present invention can use a transducer structure as shown in Fig. 13, in which a transducer $X_p$ for pumping pulses and a transducer $X_m$ for measuring pulses are stacked. In this case, a so-called PVDF, which is flexible and has an acoustic impedance similar to that of living tissue, may be used for example to provide the transducer $X_m$ for measuring pulses of Fig. 13 and a so-called PZT, which is hard and has a large acoustic impedance, may be used for example to provide the transducer $X_p$ for pumping pulses. This is a very convenient transducer structure having the advantages that a pumping pulse can be transmitted through the PVDF layer almost without attenuation and moreover that the PZT layer works as a backing for the PVDF layer. BK is a backing material.

As a further alternative, different transducers may be used for transmission and reception of measurement waves.

Moreover, in the above-described embodiments of the present invention operations are based on the difference between receiving signals obtained when a burst pulse for measurement is superposed for transmission on a peak (or trough) of a pumping pulse and when only a burst pulse for measurement is transmitted (without a pumping pulse). However, embodiments of the present invention can be provided in which measuring sensitivity is substantially doubled by obtaining the difference between receiving signals obtained when a burst pulse for measurement is superposed on a peak (a positive sound pressure part) of a pumping pulse and when a burst pulse for measurement is superposed on a trough (negative sound pressure part of a pumping pulse).

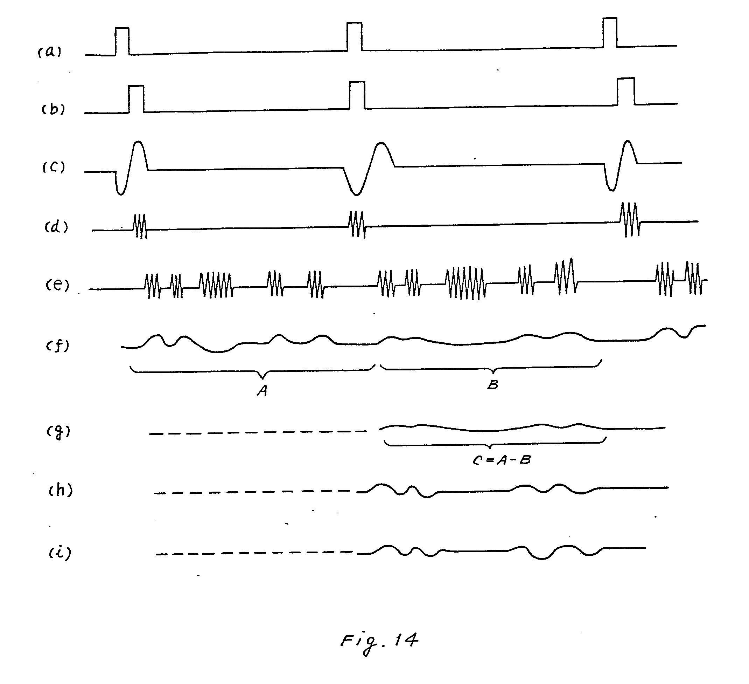

The waveforms of Fig. 14 relate to such embodiments. Comparison of Fig. 14 with Fig. 7 is useful.

As shown in waveform (f) of Fig. 14, the effects of the sound pressure P of pumping pulses work inversely in sections A and B. Therefore an output indicated by waveform (g) is doubled as compared with that of waveform (g) of Fig. 7 by taking the difference between sections A and B. Apparatus means used for realizing such embodiments are almost the same as in Fig. 6A, Fig. 8 and Fig. 10, and there is a little difference in the generation of timing pulses of waveform (a) of Fig. 14 for pumping pulses.

The present invention provides an ultrasonic non-linear parameter measuring system comprising:

(a) a pair of transmitting and receiving transducers or a transducer for transmission and reception for transmitting a comparatively high frequency and a low sound pressure ultrasonic pulse into ultrasonic wave medium and receiving reflected ultrasonic wave from said ultrasonic wave medium,

(b) a transducer for transmitting a comparatively low frequency and a high sound pressure ultrasonic pulse for pumping into said ultrasonic medium substantially from the same place and substantially in the same direction as said ultrasonic pulse for measurement,

(c) a means for controlling the drive timing of said transducers so that said ultrasonic pulse for measurement is transmitted in such a manner as being superposed to the predetermined particular phase of the ultrasonic pulse for pumping,

(d) a means for detecting phase of a certain receiving signal for the reference signal, from the reflected wave from said ultrasonic wave medium of said ultrasonic pulse for measurement, and

(e) a means for obtaining a spatial distribution on said measuring beam of non-linear parameter of said ultrasonic medium by differentiating the phase as the function of time obtained in item (d) above.

The present invention provides an ultrasonic non-linear parameter measuring system comprising:

(a) a pair of transmitting and receiving transducers or a transducer for transmission and reception for transmitting a comparatively high frequency and a low sound pressure ultrasonic pulse into ultrasonic wave medium and receiving reflected ultrasonic wave from said ultrasonic wave medium,

(b) a transducer for transmitting a comparatively low frequency and a high sound pressure ultrasonic pulse for pumping into said ultrasonic medium substantially from the same place and substantially in the same direction as said ultrasonic pulse for measurement,

(c) a means for controlling the drive timing of said transducers so that said ultrasonic pulse for measurement is transmitted in such a manner as being superposed to the predetermined particular phase of the ultrasonic pulse for pumping,

(d) a means for detecting phase of a certain receiving signal for the reference signal, from the reflected wave from said ultrasonic wave medium of said ultrasonic pulse for measurement,

(e) a means for obtaining a difference (function of time) between the phase (function of time) of the receiving signal detected when the measuring ultrasonic pulse is transmitted with the pumping ultrasonic pulse and the phase (function of time) of the receiving signal detected when the pumping ultrasonic pulse is not transmitted and only the measuring ultrasonic pulse is transmitted, and

(f) a means for obtaining spatial distribution on said measuring beam of non-linear parameter of said ultrasonic medium by differentiating the phase as the function of time obtained in item (e) above.

The present invention provides an ultrasonic non-linear parameter measuring system comprising:

(a) a pair of transmitting and receiving transducers or a transducer for transmission and reception for transmitting a comparatively high frequency and a low sound pressure ultrasonic pulse into ultrasonic wave medium and receiving reflected ultrasonic wave from said ultrasonic wave medium,

(b) a transducer for transmitting a comparatively low frequency and a high sound pressure ultrasonic pulse for pumping into said ultrasonic medium substantially from the same place and substantially in the same direction as said ultrasonic pulse for measurement,

(c) a means for controlling the drive timing of said transducers so that said ultrasonic pulse for measurement is transmitted in such a manner as being superposed to the predetermined particular phase of the ultrasonic pulse for pumping,

(d) a means for obtaining a phase difference between the receiving signal (so-called RF signal) when the measuring ultrasonic pulse is transmitted with the pumping ultrasonic pulse and the receiving signal (RF signal) when the measuring ultrasonic pulse is transmitted without, the pumping ultrasonic pulse and

(e) a means for obtaining spatial distribution on said measuring beam of non-linear parameter of said ultrasonic medium by differentiating the phase as the function of time obtained in item (d) above.

The present invention provides an ultrasonic non-linear parameter measuring system comprising:

(a) a transducer for transmission and reception or a pair of transducers for transmission and reception for transmitting ultrasonic pulse for measurement having a comparatively high frequency and low sound pressure to the ultrasonic wave medium,

(b) a transducer for transmitting a comparatively low frequency and a high sound pressure ultrasonic pulse for pumping into said ultrasonic medium substantially from the same place and substantially in the same direction as said ultrasonic pulse for measurement,

(c) a means for controlling the drive timing of said transducers so that said measuring ultrasonic pulse is transmitted in such a manner that it is superposed to any one part of predetermined plural particular phases of said pumping ultrasonic pulse,

(d) a means for detecting phase of a certain receiving signal for the reference signal as a function of time from the reflected wave from said ultrasonic wave medium of said ultrasonic pulse for measurement,

(e) a means for obtaining a difference between the phase of receiving signal detected when the measuring ultrasonic pulse is transmitted in such a way that it is superposed to any one of said particular phases of the pumping ultrasonic pulse and the phase of receiving signal detected when the measuring ultrasonic pulse is transmitted in such a way that it is superposed to other particular phase of the pumping ultrasonic pulse, and

(f) a means for obtaining spatial distribution on said measuring beam of non-linear parameter of said ultrasonic medium by differentiating the phase as the function of time obtained in item (e) above.

The present invention provides an ultrasonic non-linear parameter measuring system comprising:

(a) a transducer for transmission and reception or a pair of transducers for transmission and reception for transmitting ultrasonic pulse for measurement having a comparatively high frequency and low sound pressure to the ultrasonic wave medium,

(b) a transducer for transmitting a comparatively low frequency and a high sound pressure ultrasonic pulse for pumping into said ultrasonic medium substantially from the same place and substantially in the same direction as said ultrasonic pulse for measurement,

(c) a means for controlling the drive timing of said transducers so that said ultrasonic pulse for measurement is transmitted in such a manner that it is superposed to any one part of predetermined plural particular phases of said pumping ultrasonic pulse,

(d) a means for obtaining, by phase comparison between the RF signals, a phase difference between the receiving signal (so-called RF signal) when the measuring ultrasonic pulse is transmitted in such a way that it is superposed on any one of said particular phases of the pumping ultrasonic pulse and the receiving signal (so-called RF signal) when the measuring ultrasonic pulse is transmitted in such a way that it is superposed on other particular phase of the pumping ultrasonic pulse, and

(e) a means for obtaining spatial distribution on said measuring beam of non-linear parameter of said ultrasonic medium by differentiating the phase as the function of time obtained in item (d) above.

9

# 0 147 955

In such a system a plurality of predetermined particular phases may be positive sound pressure and negative sound pressure portions of the pumping wave.

**Claims**

1. An ultrasonic non-linear parameter measuring system, comprising:

transducer means (Xm) operable to transmit an ultrasonic pulse (Wm), as a measurement pulse, into a medium (8) in respect of which measurement is to be effected, and operable to receive ultrasonic waves reflected from the medium (8),

transducer means (Xp) operable to transmit an ultrasonic pulse (Wp), of comparatively low frequency and high sound pressure in relation to the measurement pulse (Wm), as a pumping pulse, into the medium (8), from substantially or approximately the same location as that from which the measurement pulse (Wm) is transmitted, and in substantially or approximately the same direction as that in which the measurement pulse (Wm) is transmitted,

transducer drive timing means (1, 2, 3, 4, 5) operable to cause transmission of the measurement pulse (Wm) at a timing such that it is superposed on a predetermined phase of the pumping pulse (Wp),

phase detection means (10) operable to effect phase detection in relation to received reflected ultrasonic waves, and

means (13) operable to effect differentiation with respect to time of a signal based on the results of such phase detection, thereby to obtain values representing spatial distribution of the non-linear parameter along the line of transmission of the pulses.

2. A system as claimed in claim 1, wherein the phase detection means (10) are operable to effect phase comparison between received reflected ultrasonic waves and a reference signal to provide the said signal.

3. A system as claimed in claim 1 or 2, wherein the transducer drive timing means (1, 2, 3, 4, 5) are operable also to cause transmission of a further measurement pulse (Wm) without transmission of an accompanying pumping pulse (Wp),

wherein the phase detection means (10) are operable to effect phase comparisons between the reference signal and received reflected ultrasonic waves corresponding respectively to transmission of the measurement pulse (Wm) that is superposed on the pumping pulse (Wp) and transmission of the further measurement pulse (Wm) without an accompanying pumping pulse, and

wherein the apparatus further comprises

means (11, 12) operable to obtain differences, as a function of temporal position in a received reflected ultrasonic wave, or physical position in the medium (8), between the results of the phase comparisons, as functions of temporal position, to provide the said signal (Fig. 6A, Fig. 10).

4. A system as claimed in claim 1,

wherein the transducer drive timing means (1, 2, 3, 4, 5) are operable also to cause transmission of a further measurement pulse (Wm) without transmission of an accompanying pumping pulse (Wp), and

wherein the phase detection means (10) are operable to effect phase comparison between received reflected ultrasonic waves corresponding respectively to transmission of the measurement pulse (Wm) that is superposed on the pumping pulse (Wp) and transmission of the further measurement pulse (Wm) without an accompanying pumping pulse, to obtain the said signal (Fig. 8).

5. A system as claimed in claim 1,

wherein the transducer drive timing means (1, 2, 3, 4, 5) are operable also to cause transmission of a further measurement pulse (Wm), and a further pumping pulse (Wp), at a timing such that the further measurement pulse (Wm) is superposed on a preselected phase, different from the said predetermined phase, of the further pumping pulse (Wp),

wherein the phase detection means (10) are operable to effect phase comparisons in relation to received reflected ultrasonic waves corresponding respectively to the transmissions of the measurement pulse and the further measurement pulse, and

wherein the apparatus further comprises

means (11, 12) operable to obtain differences between the results of the phase comparisons, to provide the said signal (Fig. 6A, Fig. 10).

6. A system as claimed in claim 1,

wherein the transducer drive timing means (1, 2, 3, 4, 5) are operable also to cause transmission of a further measurement pulse (Wm), and a further pumping pulse (Wp), at a timing such that the further measurement pulse (Wm) is superposed on a preselected phase, different from the said predetermined phase, of the further pumping pulse (Wp), and

wherein the phase detection means (10) are operable to effect a phase comparison of received reflected ultrasonic waves corresponding respectively to the transmissions of the measurement pulse and the further measurement pulse, to obtain the said signal (Fig. 8).

7. A system as claimed in Claim 5 or 6, wherein the said predetermined and preselected phases correspond respectively to positive sound pressure and negative sound pressure phases of pumping pulses (Wp).

8. A system as claimed in any preceding claim, operable to provide repeated transmissions of measurement (Wm) and pumping pulses (Wp), and to employ synchronous addition to obtain values

10

# 0 147 955

representing the said spatial distribution of the non-linear parameter having an improved S/N ratio (Fig. 10).

9. An ultrasonic non-linear parameter measuring method, comprising:

transmitting an ultrasonic pulse (Wm), as a measurement pulse, into a medium (8) in respect of which measurement is to be effected, and receiving ultrasonic waves reflected from the medium (8),

transmitting an ultrasonic pulse (Wp), of comparatively low frequency and high sound pressure in relation to the measurement pulse (Wm), as a pumping pulse, into the medium (8), from substantially or approximately the same location as that from which the measurement pulse is transmitted, and in substantially or approximately the same direction as that in which the measurement pulse is transmitted,

the transmission of the measurement pulse (Wm) taking place at a timing such that it is superposed on a predetermined phase of the pumping pulse (Wp),

effecting phase detection in relation to received reflected ultrasonic waves, and

effecting differentiation with respect to time of a signal based on the results of such phase detection, thereby to obtain values representing spatial distribution of the non-linear parameter along the line of transmission of the pulses.

**Patentansprüche**

1. System zur Messung eines nichtlinearen Parameters mittels Ultraschall, mit:

Wandlereinrichtungen (Xm), die betreibbar sind, um einen Ultraschallimpuls (Wm), als einen Meßimpuls, in ein Medium (8) zu senden, in Bezug auf welches die Messung bewirkt werden soll, und betreibbar ist, um von dem Medium (8) reflektierte Ultraschallwellen zu empfangen,

Wandlereinrichtungen (Xp), die betreibbar sind, um einen Ultraschallwellenimpuls (Wp) von vergleichbar niedriger Frequenz und hohem Schalldruck in Relation zu dem Meßimpuls (Wm), als Pumpimpuls in das Medium (8) zu senden, von im wesentlichen oder angenähert demselben Ort, von welchem der Meßimpuls (Wm) gesendet wird, und im wesentlichen oder angenähert in derselben Richtung wie jene, in welche der Meßimpuls (Wm) gesendet wird,

Wandlersteuerzeitgeber (1, 2, 3, 4, 5), die betriebbar sind, um ein Senden des Meßimpulses (Wm) zu solch einer Zeitsteuerung zu verursachen, daß er einer vorbestimmten Phase des Pumpimpulses (Wp) überlagert wird,

Phasendetektionseinrichtungen (10), die betreibbar sind, um Phasendetektion in Relation zu den empfangenen, reflektierten Ultraschallwellen zu bewirken, und

Einrichtungen (13), die betreibbar sind, um eine Differentiation in Bezug auf die Zeit eines Signals zu bewirken, basierend auf den Ergebnissen von solch einer Phasendetektion, um dadurch Werte zu erhalten, welche eine räumliche Verteilung des nichtlinearen Parameters längs der Transmissionslinie der Impulse darstellt.

2. System nach Anspruch 1, bei dem die Phasendetektionseinrichtungen (10) betreibbar sind, um einen Phasenvergleich zwischen empfangenen reflektierten Ultraschallwellen und einem Referenzsignal zu bewirken, um das genannte Signal zu liefern.

3. System nach Anspruch 1 oder 2, bei dem die Wandler-Steuerzeitgebereinrichtungen (1, 2, 3, 4, 5) auch betreibbar sind, um eine Transmission eines weiteren Meßimpulses (Wm) ohne Transmission eines begleitenden Pumpimpulses (Wp) zu bewirken, bei dem die Phasendetektionseinrichtungen (10) betreibbar sind, um Phasenvergleiche zwischen dem Referenzsignal und empfangenen reflektierten Ultraschallwellen, welche jeweils der Transmission des Meßimpulses (Wm) entsprechen, der dem Pumpimpuls (Wp) überlagert wird, und das Senden des weiteren Meßimpulses (Wm), ohne einen begleitenden Pumpimpuls, zu bewirken, und

bei dem die Vorrichtung ferner umfaßt

Einrichtungen (11, 12), die betriebbar sind, um, als eine Funktion einer zeitlichen Position in einer empfangenen, reflektierten Ultraschallwelle, oder einer physikalischen Position in dem Medium (8) Differenzen zwischen den Ergebnissen der Phasenvergleiche zu erhalten, als Funktionen der zeitlichen Position, um das genannte Signal zu liefern (Fig. 6A, Fig. 10).

4. System nach Anspruch 1, bei dem die Wandler-Steuerzeitgebereinrichtungen (1, 2, 3, 4, 5) auch betreibbar sind, um die Transmission eines weiteren Meßimpulses (Wm) ohne Transmission eines begleitenden Pumpimpulses (Wp) zu verursachen, und

bei dem die Phasendetektionseinrichtungen (10) betreibbar sind, um einen Phasenvergleich zwischen empfangenen reflektierten Ultraschallwellen, die jeweils der Transmission des Meßimpulses (Wm) entsprechen, der dem Pumpimpuls (Wp) überlagert ist, und die Transmission eines weiteren Meßimpulses (Wm), ohne einen begleitenden Pumpimpuls, zu bewirken, um das genannten Signal (Fig. 8) zu erhalten.

5. System nach Anspruch 1, bei dem die Wandler-Steuerzeitgebereinrichtungen (1, 2, 3, 4, 5) betreibbar sind, um auch die Transmission eines weiteren Meßimpulses (Wm), und eines weiteren Pumpimpulses (Wp), zu einer solchen Zeitsteuerung zu verursachen, daß der weitere Meßimpuls (Wm) einer vorausgewählten Phase überlagert wird, die von der genannten vorbestimmten Phase des weiteren Pumpimpulses (Wp) verschieden ist,

und bei dem die Phasendetektionseinrichtungen (10) betreibbar sind, um Phasenvergleiche in Relation zu empfangenen reflektierten Ultraschallwellensignalen zu bewirken, welche jeweils den Transmissionen

11

des Meßimpulses und des weiteren Meßimpulses entsprechen, und
bei dem die Vorrichtung ferner umfaßt,
Einrichtungen (11, 12), die betriebbar sind, um Unterschiede zwischen den Ergebnissen der Phasenvergleiche zu erhalten, um das genannte Signal zu liefern (Fig. 6A, Fig. 10).

6. System nach Anspruch 1, bei dem die Wandler-Steuerzeitgebereinrichtungen (1, 2, 3, 4, 5) auch betreibbar sind, um eine Transmission eines weiteren Meßimpulses (Wm) und eines weiteren Pumpimpulses (Wp), zu solch einer Zeitsteuerung zu verursachen, daß der weitere Meßimpuls (Wm) einer vorausgewählten Phase überlagert wird, die von der genannten vorbestimmten Phase des weiteren Pumpimpulses (Wp) verschieden ist, und
bei dem die Phasendetektionseinrichtungen (10) betreibbar sind, um einen Phasenvergleich von empfangenen reflektierten Ultraschallwellen zu bewirken, die jeweils den Transmissionen des Meßimpulses und des weiteren Meßimpulses entsprechen, um das genannte Signal (Fig. 8) zu erhalten.

7. System nach Anspruch 5 oder 6, bei dem die genannten vorbestimmten und vorausgewählten Phasen den positiven Schalldruck- bzw. negativen Schalldruckphasen der Pumpimpulse (Wp) entsprechen.

8. System nach einem der vorhergehenden Ansprüche, das betreibbar ist, um wiederholte Transmissionen von Meß- (Wm) und Pumpimpulsen (Wp) zu liefern, und um eine synchrone Addition zu verwenden, um Werte zu erhalten, welche die genannten Raumverteilung des nichtlinearen Parameters darstellen, welcher ein verbessertes Signal/Rauschen-Verhältnis aufweist (Fig. 10).

9. Ultraschallverfahren zur Messung eines nichtlinearen Parameters, mit:
Senden eines Ultraschallimpulses (Wm), als Meßimpuls, in ein Medium (8), in Bezug auf welches eine Messung bewirkt werden soll, und Empfangen von Ultraschallwellen, die von dem Medium (8) reflektiert werden,
Senden eines Ultraschallimpulses (Wp), von vergleichsweise niedriger Frequenz und hohem Schalldruck in Relation zu dem Meßimpuls (Wm), als Pumpimpuls, in das Medium (8), von im wesentlichen oder angenähert demselben Ort wie von demjenigen, von welchem der Meßimpuls gesendet wird, und im wesentlichen oder angenähert in derselben Richtung, in welcher der Meßimpuls gesendet wird,
wobei das Senden des Meßimpulses (Wm) zu solch einer Zeitlage stattfindet, daß er einer vorbestimmten Phase des Pumpimpulses (Wp) überlagert wird,
Bewirken der Phasendetektion in Relation zu empfangenen reflektierten Ultraschallwellen, und
Bewirken einer Differentiation in Bezug auf die Zeit eines Signales, basierend auf den Ergebnissen solch einer Phasendetektion, um dadurch Werte zu erhalten, welche eine Raumverteilung des nichtlinearen Parameters längs der Transmissionslinie der Impulse darstellen.

**Revendications**

1. Un système de mesure d'un paramètre non linéaire d'un milieu de propagation d'ultrasons, comprenant:
des moyens transducteurs (Xm) capables d'émettre une impulsion ultasonore (Wm), à titre d'impulsion de mesure, dans un milieu (8) sur lequel on doit effectuer une mesure, et capables de recevoir des ondes ultrasonores réfléchies à partir du milieu (8),
des moyens transducteurs (Xp) capables d'émettre dans le milieu (8), en tant qu'impulsion de pompage, une impulsion ultrasonore (Wp), de fréquence relativement faible et de pression sonore élevée, par rapport à l'impulsion de mesure (Wm), à partir d'une position pratiquement ou approximativement identique à la position de laquelle l'impulsion de mesure (Wm) est émise, et dans une direction pratiquement ou approximativement identique à celle dans laquelle l'impulsion de mesure (Wm) est émise,
des moyens de définition de caractéristiques temporelles d'excitation de transducteurs (1, 2, 3, 4, 5) capables de provoquer l'émission de l'impulsion de mesure (Wm) dans des conditions temporelles telles qu'elle soit superposée sur une phase prédéterminée de l'impulsion de pompage (Wp),
des moyens de détection de phase (10) capables d'effectuer une détection de phase portant sur des ondes ultrasonores réfléchies et reçues, et
des moyens (13) capables d'effectuer une différentiation par rapport au temps d'un signal basé sur les résultats de la détection de phase précitée, pour obtenir ainsi des valeurs représentant la distribution spatiale du paramètre non linéaire le long de la ligne de transmission des impulsions.

2. Un système selon la revendication 1, dans lequel les moyens de détection de phase (10) sont capables d'effectuer une comparaison de phase entre des ondes ultrasonores réfléchies et reçues, et un signal de référence, pour produire le signal précité.

3. Un système selon la revendication 1 ou 2, dans lequel les moyens de définition de caractéristiques temporelles d'excitation de transducteurs (1, 2, 3, 4, 5) sont également capables de provoquer l'émission d'une impulsion de mesure supplémentaire (Wm) sans l'émission d'une impulsion de pompage l'accompagnant (Wp),
dans lequel les moyens de détection de phase (10) sont capables d'effectuer une comparaison de phase entre le signal de référence et des ondes ultrasonores réfléchies et reçues, correspondant respectivement à l'émission de l'impulsion de mesure (Wm) qui est superposée sur l'impulsion de pompage (Wp), et à l'émission de l'impulsion de mesure supplémentaire (Wm), non accompagnée par une impulsion de pompage, et

dans lequel l'appareil comprend en outre

des moyens (11, 12) capables de déterminer des différences, en fonction de la position temporelle dans un onde ultrasonore réfléchie et reçue, ou de la position physique dans le milieu (8), entre les résultats des comparaisons de phase, en fonction de la position temporelle, pour produire le signal précité (figure 6A, figure 10).

4. Un système selon la revendication 1, dans lequel les moyens de définition de caractéristiques temporelles d'excitation de transducteurs (1, 2, 3, 4, 5) sont également capables de provoquer l'émission d'une impulsion de mesure supplémentaire (Wm), sans l'émission d'une impulsion de pompage l'accompagnant (Wp), et

dans lequel les moyens de détection de phase (10) sont capable d'effectuer une comparaison de phase entre des ondes ultrasonores réfléchies et reçues correspondant respectivement à l'émission de l'impulsion de mesure (Wm) qui est superposée sur l'impulsion de pompage (Wp), et à l'émission de l'impulsion de mesure supplémentaire (Wm), non accopagnée par une impulsion de pompage, pour obtenir le signal précité (figure 8).

5. Un système selon la revendication 1,

dans lequel les moyens de définition de caractéristiques temporelles d'excitation de transducteurs (1, 2, 3, 4, 5) sont également capables de provoquer l'émission d'une impulsion de mesure supplémentaire (Wm), et d'une impulsion de pompage supplémentaire (Wp), dans des conditions temporelles telles que l'impulsion de mesure supplémentaire (Wm) soit superposée sur une phase présélectionnée, différente de la phase prédéterminée, de l'impulsion de pompage supplémentaire (Wp),

dans lequel les moyens de détection de phase (10) sont capables d'effectuer des comparaisons de phase portant sur des ondes ultrasonores réfléchies et reçues qui correspondent respectivement aux émissions de l'impulsion de mesure et de l'impulsion de mesure supplémentaire, et

dans lequel l'appareil comprend en outre

des moyens (11, 12) capables de déterminer des différences entre les résultats des comparaisons de phase, pour produire le signal précité (figure 6A, figure 10).

6. Un système selon la revendication 1,

dans lequel les moyens de définition de caractéristiques temporelles d'excitation des transducteurs (1, 2, 3, 4, 5) sont également capables de provoquer l'émission d'une impulsion de mesure supplémentaire (Wm), et d'une impulsion de pompage supplémentaire (Wp), dans des conditions temporelles telles que l'impulsion de mesure supplémentaire (Wm) soit superposée sur une phase présélectionnée, différente de la phase prédéterminée, de l'impulsion de pompage supplémentaire (Wp), et

dans lequel les moyens de détection de phase (10) sont capables d'effectuer une comparaison de phase entre des ondes ultrasonores réfléchies et reçues, correspondant respectivement aux émissions de l'impulsion de mesure et de l'impulsion de mesure supplémentaire, pour obtenir le signal précité (figure 8).

7. Un système selon la revendication 5 ou 6, dans lequel les phases prédéterminées et présélectionnées correspondent respectivement à des phases à pression sonore positive et à pression sonore négative des impulsions de pompage (Wp).

8. Un système selon l'une quelconque des revendications précédentes, capable de donner lieu à des émissions répétées d'impulsions de mesure (Wm) et de pompage (Wp), et d'employer une addition synchrone pour obtenir des valeurs représentant la distribution spatiale du paramètre non linéaire, avec un rapport S/B amélioré (figure 10).

9. Un procédé de mesure d'un paramètre non linéaire d'un milieu de propagation d'ultrasons, comprenant les opérations suivantes:

on émet une impulsion ultrasonore (Wm), à titre d'impulsion de mesure, dans un milieu (8) sur lequel on doit effectuer une mesure, et on reçoit des ondes ultrasonores réfléchies à partir du milieu (8),

on émet dans le milieu (8), à titre d'impulsion de pompage, une impulsion ultrasonore (Wp), de fréquence relativement faible et de pression sonore élevée, par rapport à l'impulsion de mesure (Wm), à partir d'une position pratiquement ou approximativement identique à la position de laquelle l'impulsion de mesure est émise, et dans une direction pratiquement ou approximativement identique à la direction dans laquelle l'impulsion de mesure est émise,

l'émission de l'impulsion de mesure (Wm) s'effectuant à un moment tel qu'elle soit superposée sur une phase prédéterminée de l'impulsion de pompage (Wp),

on effectue une détection de phase portant sur des ondes ultrasonores réfléchies et reçues, et

on effectue une différentiation par rapport au temps d'un signal basé sur les résultats de cette détection de phase, pour obtenir ainsi des valeurs représentant la distribution spatiale du paramètre non linéaire le long de la ligne de transmission des impulsions.

(a)

$t \, or \, Z$

(b)

Fig. 1

$Z=0$   $Z=Z$   $Z$

$X_P$

$W_P$

$M$

$X_m$

$W_m$

$X_P$

$W_P$

$D_P$

$D_m$

$R$

Fig. 2

Gain

$Z \, or \, t$

Fig. 3

1

(a) REFERENCE SIGNAL

(b) REFLECTED WAVE FROM $z = z_1$

(c) REFLECTED WAVE FROM $z = z_2$

Fig. 4

(a) REFLECTED WAVE FROM $z = z_1$

(b) REFLECTED WAVE $z = z_1 + \Delta z$

(c) (a)+(b)

Fig. 5

Fig 6 A

Fig. 6 B

Fig. 6 C

**0 147 955**

Fig. 7

Fig. 8

$(A) \frac{B}{A}(Z)$

$(B)$ N

$(C)$ S1

S2

Sk

$(D)$ SΣ

$=S1+--+Sk$

z or t

Fig. 9

Fig. 10

( B/A(Z) )

Fig. 11

Fig. 12

8

Fig. 13

Fig. 14